# EUROPEAN PATENT APPLICATION

(11) **EP 2 112 535 A1**
(43) Date of publication of application: **28.10.2009**
(21) Application number: 09157112.5
(22) Date of filing: 01.04.2009
(51) Int. Cl.: G02B 6/38

(54) **Optical attenuator**

(30) Priority: 02.04.2008 US 61239
(71) Applicant: Tyco Electronics Corporation, Berwyn, PA 19312 (US)
(72) Inventor: Baechtle, David Robert, Dillsburg, PA 17019 (US); Williams, Larry Jason, Mount Joy, PA 17522 (US)
(74) Representative: Johnstone, Douglas Ian

(57) **Abstract**

An optical attenuating connector (10) includes a housing (12) having a front orientation and a rear orientation. A ferrule (13) is disposed in the housing (12). A fiber-receiving channel is disposed in the housing (12) rearward of the ferrule (13) and is adapted to receive and retain a terminating fiber. A stub (14) of attenuating fiber is disposed in the ferrule (13).
A crimp splice arrangement (30,40) is also located in the housing for coupling the fibre stub to a mating terminating fibre.

## Description

The invention relates to an optical attenuator and, more particularly, to a field-installable optical attenuator.

Fiber-optic telecommunication networks are constantly being upgraded to carry more channels over a single optical fiber. Associated with such multi-channel optical systems are wavelength division multiplexers (WDM), which operate to combine a number of separate and distinct wavelength regions (channels) onto a single optical fiber in one direction of transmission, and to separate them from the optical fiber in the other direction. For optimum performance of the WDMs and associated transmitters and receivers, it is important that the optical signal power of each channel be precisely controlled, and preferably equal to each other. To this end, optical attenuators are used to reduce the power in a fiber to a particular value.

Attenuators are available in different forms. For example, a popular type of attenuator is an in-line attenuator (ILA). An ILA is manufactured by fusion splicing a piece of high attenuation fiber along the length of a cable assembly. To protect the splice, a rigid splice protector is typically placed over it. When installing an ILA in a jacketed cable having aramid strength members, the strength members are also attached to the splice protector. Unfortunately, the splice protector is stiff, resulting in a generally unmanageable section of cable. Furthermore, installing the ILA tends to be time consuming, requiring two splices and the installation of the splice protector.

An alternative attenuator approach involves the use of attenuating fiber for the entire length of the cable assembly. This approach avoids the use of a rigid splice protector and the need to make two splices. Attenuating fiber, however, is very expensive, and, if cable assemblies of different lengths are needed, different fibers of varying attenuation levels are required to compensate for the different cable lengths to maintain a consistent attenuation.

Another alternative to avoid splicing the cable assembly is to use a built-out attenuator (BOA). BOAs are well known and described for example in US Patent No. 6,951,425. These attenuators comprise a section of attenuation fiber housed in a connector-like structure. Specifically, one end of the structure receives a plug of a cable assembly and the other end is, itself, a plug for insertion into an adapter. Thus, a BOA interfaces between the plug of a cable assembly and an adapter. Although BOAs are convenient and require no specialized training or equipment to install in the field, they are nevertheless bulky and, because they have connector interfaces on both sides, they are, essentially, duplicative of a connector and all the components and distortion attributable to a connector. Thus, this approach tends to increase costs, reflective loss (and other distortions), and the length and bulk of the connector end.

Therefore, a need exists for a field-installable optical attenuator that is configurable for different attenuation levels, is economical and non-bulky.

This problem is solved by an optical attenuating connector according to claim 1.

According to the invention, an optical attenuating connector includes a housing having a front orientation and a rear orientation. A ferrule is disposed in the housing. A fiber-receiving channel is disposed in the housing rearward of the ferrule and is adapted to receive and retain a terminating fiber. A stub of attenuating fiber is disposed in the ferrule.

The invention will now be described by way of example with reference to the accompanying drawings wherein:

Figs. 1a and 1b show an LC-type optical attenuating connector having a clamping assembly of the present invention in an exploded view and a perspective view, respectively;

Figs. 2a and 2b show cross-sectional views of the clamping assembly in the connector of Fig. 1b in its pre-actuation and post-actuation states, respectively;

Figs. 3a and 3b show perspective and axial cross-sectional views of the platform of the clamping assembly shown in Fig. 1a;

Figs. 4a and 4b show perspective and axial cross-sectional views of the first cam member of the clamping assembly shown in Fig. 1a; and

Figs. 5a through 5c show perspective and axial horizontal and vertical cross-sectional views of the second cam member of the clamping assembly shown in Figs. 1a and 1b.

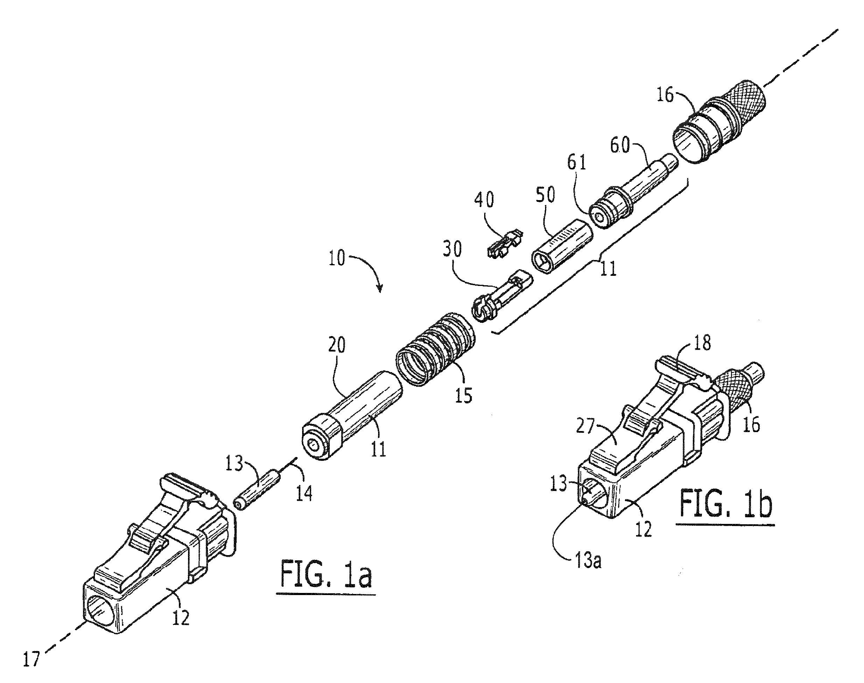

Referring to Fig. 1a, a preferred embodiment of an LC-type optical attenuating connector 10 comprising an attenuating fiber stub 14 of the present invention is shown in an exploded view. The attenuating connector 10 is described herein with respect to a top/bottom and front/back orientation. It should be understood that reference is made to this orientation for purposes of illustration and to describe the relative position of the components within a given attenuating connector. It should be therefore understood that this orientation is not an absolute orientation and that rotating, inverting or otherwise altering the attenuating connector's position in space is possible without changing the relative position of the components of the attenuating connector. Additionally, the attenuating connector 10 has at least one optical axis 17. The optical axis 17 corresponds to the axis along which light propagates in the terminated attenuating connector. It should be understood that the attenuating connector may have more than one optical axis if the attenuating connector is used to couple more than one fiber. For purposes of simplicity, however, the attenuating connector of the present invention will be described herein only with respect to a single optical axis. Furthermore, the attenuating connector is described herein is with respect to an LC-type attenuating connector, although the claimed invention can be practiced with any field-installable connector, including single-fiber ferrule connector types such as those used in the LC, ST, MU and SC type connectors, or multi-fiber ferrule connector types such as those used in the MTRJ, the MPX, the MPO, LIGHTRAY MPX® and other MT-type attenuating connectors.

The attenuating connector 10 of the present invention is described herein in both its pre-actuated state and post-actuated state. In the pre-actuated state, the clamping assembly 11 has not been actuated so the terminating fiber (not shown) is not secured to the attenuating connector. In the post-actuated state, the clamping assembly has been actuated such that the attenuating connector is secured to the terminating fiber. Although the field terminating mechanism described in detail herein is a clamping assembly 11, it should be understood that the attenuator of the present invention is not limited to a clamping mechanism and may embody other known field-installation mechanisms, such as, springs or adhesive (e.g., epoxy).

As used herein, the terms "fiber" or "terminating fiber" refer to the optical fiber that is inserted into the back of the attenuating connector and secured to the attenuating connector. As discussed below, this fiber may be clamped in the attenuating connector 10 such that its end face is presented in the end face of the ferrule, or, more preferably, it is clamped such that its end face abuts a fiber stub, which, in turn, has an end face presented in the ferrule.

Referring to Fig. 1a, the small-form factor LC-type attenuating connector 10 is disclosed. Specifically, the attenuating connector 10 comprises a housing 12, and a ferrule 13, which, when assembled, projects from the front of the housing as shown in Fig. 1b.

The ferrule contains the fiber stub 14 that extends rearward therefrom and into a clamping assembly 11 behind the ferrule 13. The combination of the ferrule 13 and the clamping assembly 11 is urged forward relative to the housing 12 by a resilient spring member 15. A rear body 16 is disposed at the rear end of the housing 12 and is configured to provide a backstop against which the spring member 15 can press to bias the ferrule 13 and clamping assembly 11 forward. Each of these components is discussed in detail below.

The housing 12 is a common LC-type connector housing. In this respect, a benefit of the present invention is that the housing 12 of the attenuating connector 10 may be the same as used for any type of traditional field installable connector. This reduces inventory requirements and allows current tools and techniques to be used in preparing the attenuating connector of the present invention.

A releasable latch 27 for retaining the assembled attenuating connector into a mating receptacle is integral to the housing 12. A latch actuator 18, integral to the housing, may also be provided so that when it is depressed by finger pressure it will in turn actuate the releasable latch and provide an anti-snagging feature.

The ferrule 13 is shown containing the stub fiber 14, which is secured to the ferrule using a traditional adhesive such as epoxy. The front face 14a of a fiber 14 is presented on the front face 13a of the ferrule 13. The fiber stub preferably is affixed and polished in the ferrule in a controlled environment where precise polishing equipment and skilled personnel are available.

The stub comprises a section of attenuating fiber. Attenuating fiber is well know and is typically based on standard telecom single mode optical fiber geometry, but has a core that is doped with metal ions to partially or completely absorb incoming light. Accordingly, the term "attenuating fiber" refers to any fiber having a core doped to absorb light. Attenuation levels can vary accordingly to application. For example, typical attenuation levels range from about 0.005 to about 20 dB/cm, with high attenuation levels being greater than 15 dB/cm, and lower attenuation levels (e.g. for use in patch cords and backplane assemblies) being about 0.005 to 0.4 dB/cm. Preferably, the attenuating fiber has virtually uniform attenuation over the 1250 to 1620 nm window ensuring compatibility with current and future DWDM, CATV and other telecom networks.

The attenuation level of the attenuating connector of the present invention may be altered by using stubs of equal length but with different attenuation levels, by using stubs of similar attenuation levels but different lengths, or by using a combination of different lengths and different attenuation levels. The Tyco Electronics field-installable attenuating connectors are particularly configurable because the clamping mechanism is tolerant of stubs of different lengths. Specifically, the fiber-receiving channel (discussed below) is relatively long compared to other field-installable devices, and, thus, the distance the stub can extend into the channel is highly variable. Because this distance is highly variable so too is the length of the stub that can be used. Furthermore, referring back to Fig. 1, although the fiber stub is shown extending from the back of the ferrule for coupling with the terminating fiber in clamping assembly, a much shorter fiber stub may be used which does not protrude from the back end of the ferrule. In such a configuration, the fiber stub would optically couple in the ferrule 13 with a terminating fiber that extends forward from the clamping assembly.

Because the attenuation level of the attenuator of the present invention depends on the length and type of stub used, the housing of the attenuating connector remains the same. This is beneficial in that a family of attenuating connectors of different attenuation levels can be produced with the exact same components except for the fiber stub. In this regard, even the same type of attenuating fiber can be used for the stub providing the length is different as discussed above. Therefore, not only does the attenuating connector of the present invention share common components with its connector counterpart, but also with attenuating connectors of different attenuation values. This dramatically reduces inventor and tooling costs.

Furthermore, because the stub determines the attenuation level, the attenuating connector can be pre-configured in a controlled and reliable factory setting during installation of the stub 14. That is, ordinarily, the stub is factory installed to ensure that it is correctly adhered to the ferrule and the ferrule and fiber are polished to exacting tolerances. Accordingly, attenuating connectors of different attenuation levels are available to the technician in the field for field installation. In a preferred embodiment, attenuating connectors of different attenuation levels are premarked to differentiate themselves given the fact that, size-wise and shape-wise, they are identical. The indication may be an attenuation rating, or color/symbol coding on the attenuating connector.

Referring back to Fig. 1, the rear body 16 retains the clamping assembly and the spring member 15 in the housing, providing a surface against which one end of the spring member is seated in a fixed position relative to the housing. Additionally, the rear body provides an anchor point for terminating the strength members in a reinforced optical fiber cable. The rear body is affixed to the housing by means of an interference fit between an outside surface of the rear body and an internal surface of a cavity formed in the rear of the housing. Barbs or knurling on the outside surface of the rear body that interferes with the housing further enhances the fixing of the rear body to the housing.

The clamping assembly 11 is disposed behind the ferrule. The clamping assembly serves to secure the terminating fiber to the attenuating connector such that the fiber cannot be pulled from the attenuating connector under ordinary force. To this end, the clamping assembly imparts a radial force upon the fiber to increase the friction between the fiber and the attenuating connector. The clamping assembly clamps a terminating fiber such that the fiber is optically coupled to the stub, which has been pre-terminated and polished in the ferrule 13 as described above. Although the clamping assembly 11 is described herein in terms of the axially actuated mechanism used in the Tyco LIGHTCRIMP PLUS product line, it should be understood that the present invention may be practiced using any field installable mechanism, including radially- actuated and adhesive-type, field termination approaches.

The clamping assembly 11 comprises a housing 20 and a platform 30 disposed in the housing 20 and being fixed therein both radially and axially. The platform 30 defines a fiber-receiving channel 34 along the optical axis 17 to receive at least one fiber. At least a portion of the fiber-receiving channel 34 is accessible from the top. The clamping assembly 11 also comprises first and second cam members 40, 50. The first cam member 40 has a first cam surface 41, and is disposed in the housing 20 above and adjacent to the fiber-receiving channel 34. The first cam member 40 is radially actuateable within the housing 20. The second cam member 50, which is preferably a sleeve 50a, is disposed in the housing 20 and is axially slidable therein. The second cam member 50 has a second cam surface 51 adjacent the first cam surface 41 and configured such that, upon forward motion of the second cam member 50 relative to the first cam member 40, the first cam member 40 is urged downward as a result of a camming action between the first and second cam surfaces 41, 51. The clamping assembly also comprises an actuator 60 disposed slidably within the housing 20 behind and adjacent to the second cam member 50. The actuator 60 is configured, such that, when moved forward, it forces the second cam member 50 forward relative to the first cam member 40. Each of these components is described below in greater detail.

As shown in Fig. 1a, the housing 20 of the clamping assembly 11 is preferably a capillary base 20a which in adapted to receive a ferrule in its front end. The back end of the capillary base 20a houses the clamping assembly.

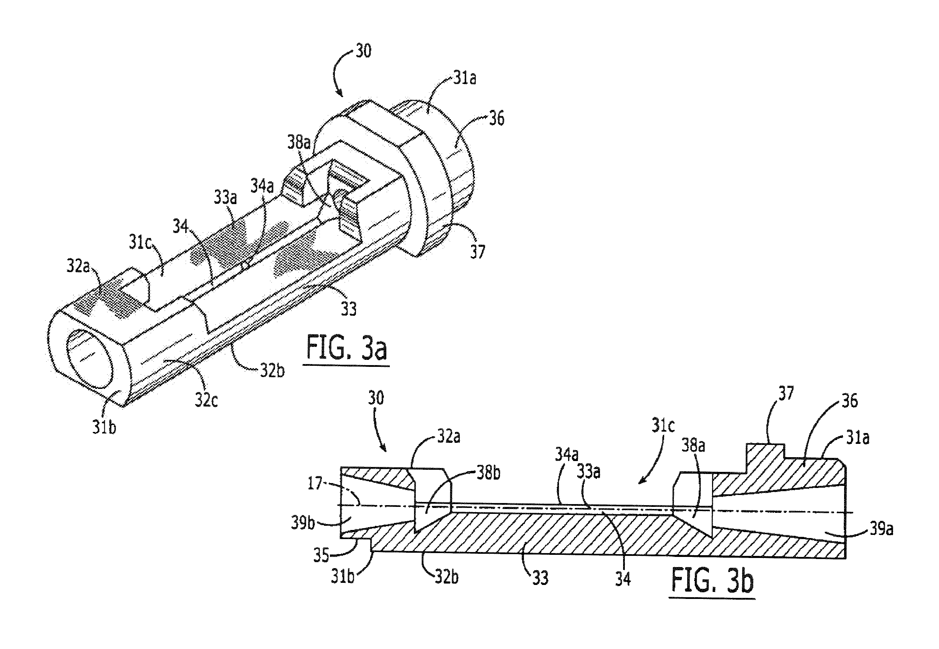

Referring to Fig. 3a and 3b, perspective and axial cross-sectional views of the platform 30 are shown, respectively. As with the other components, the platform 30 has a top/bottom and front/back orientation. In Figs. 3a and 3b, the front of the attenuating connector is toward the right of the page and the top is toward the top of the page.

The function of the platform 30 is to provide a stable base within the clamping assembly to hold and align the fiber before, during and after the clamping operation. In a preferred embodiment, the platform 30 is held securely within the capillary base 20a such that radial and axial movement of the fiber-receiving channel 34 is essentially prevented. The platform 30 comprises a substrate portion 33 which provides a sturdy base upon which the fiber will be clamped and held secure in the attenuating connector. The substrate portion 33 has a substantially planar substrate surface 33a into which is formed a fiber-receiving channel 34. The fiber-receiving channel provides a pathway along which the fiber runs. In this embodiment, the fiber-receiving channel 34 is a V-groove, although alternative fiber-receiving channel configurations are within the scope of the invention and may include, for example, a U-groove or a channel formed by members extending up from the substrate surface 33a.

Another function of the platform 30 is preferably to provide a platform for mating the fiber stub and the fiber. Specifically, the fiber stub and the fiber preferably are butt jointed at point 34a in fiber-receiving channel 34. It should be obvious that the location of point 34a can be anywhere along the fiber-receiving channel although generally the middle portion is preferred such that the clamping force on the fiber stub and the terminating fiber is approximately the same.

The substrate portion 33 around the fiber-receiving channel should comprise a material that is somewhat compliant to allow for some degree of impression by the fiber during actuation. That is, once the assembly is actuated and the fiber is pressed into the fiber-receiving channel, it is preferred that the material defining the channel deforms slightly around the fiber to increase the surface area contact with the fiber and thereby hold it more securely. Although a compliant material is preferred, it is within the scope of the present invention that other, harder materials may be used depending upon the application. For example, in certain situations, it may be preferable to use a silicon-based material with one or more fiber-receiving channels etched into it. Although silicon tends to be hard and noncompliant, it is capable of being etched with extreme precision. The benefits of this precise etching may outweigh the drawbacks of the silicon's hardness.

The substrate portion 33 also comprises front and back channel lead-in cavities 38a, 38b at the front and back of the fiber-receiving channel 34, respectively. The front channel lead-in cavity 38a serves to guide the fiber stub into the fiber-receiving channel, while the back channel lead-in cavity 38b serves to guide the terminating fiber into the fiber-receiving channel. By guiding the fiber into the fiber-receiving channel, the chance of damaging either the fiber stub or the terminating fiber is reduced.

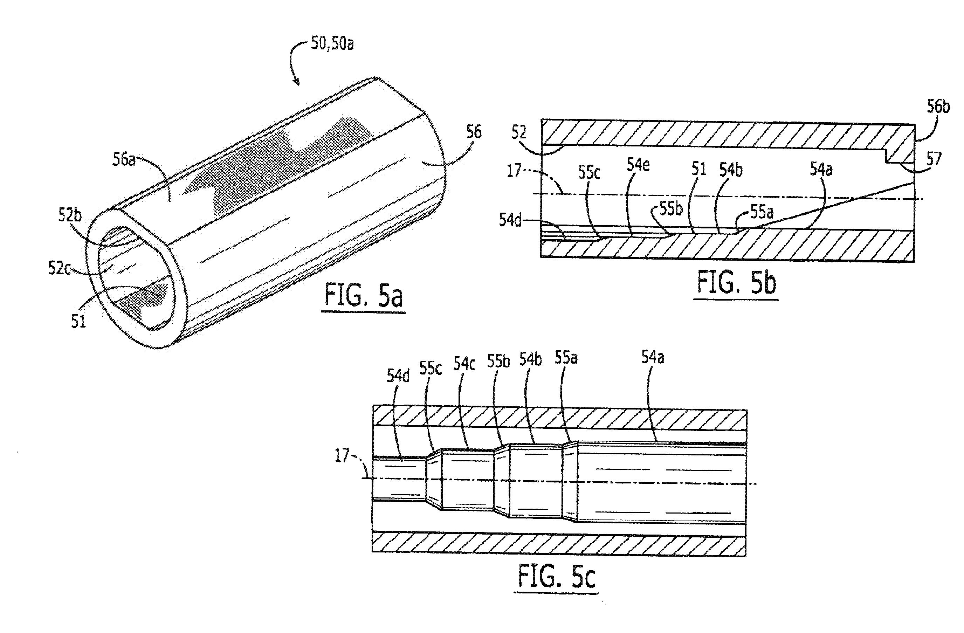

The platform 30 also comprises top and bottom surfaces 32a and 32b, which are preferably planar surfaces. Planar surfaces are preferred since they are readily machined and easily measured to ensure compliance with specific tolerance limits. As discussed below with respect to Fig. 5, the surfaces 32a and 32b contact corresponding surfaces 51, 52 in the sleeve 50a and slide along the sleeve surfaces during actuation. Aside from enhancing manufacturability, these planar surfaces also facilitate a simple axial motion of the sleeve relative to the platform 30 rather than a more complicated taper arrangement as was used in the prior art.

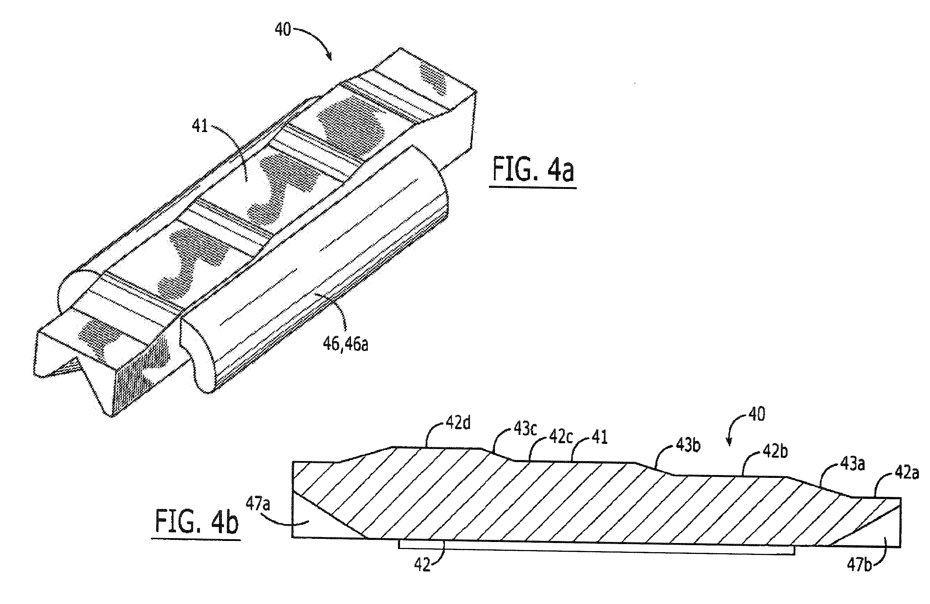

The top surface 32a of the platform 30 defines an opening 31c at its top to allow access to the fiber-receiving channel 34 from the top. The opening 31c is adapted to receive the first cam member 40 (see Fig. 4). In a preferred embodiment, the platform 30 also comprises a stop-receiving cavity 35 along its bottom surface 32b to receive a corresponding stop 57 of the sleeve 50a (see Fig. 5b). The stop 57 prevents the sleeve 50a from being assembled backwards onto the platform 30.

The platform 30 also comprises front and back end portions 31a, 31b. These end portions serve two primary functions. First, they serve to align and hold the platform 30 such that its fiber-receiving channel 34 is coaxial with the optical axis 17. Second, they provide initial lead-in cavities 39a, 39b into the more-narrow channel lead-in cavities 38a and 38b, respectively, in the substrate portion of the platform 30.

The front portion 31 a comprises a protrusion 36 and a flange 37. The protrusion 36 is configured to fit snugly in the passageway 26 of the capillary base 20a. By fitting snugly in the passageway, the protrusion 36 essentially eliminates radial movement of the front end 31a of the platform. The flange 37 cooperates with the intermediate portion 25 of the capillary base 20a such that, when the flange abuts the back face 25b of the intermediate portion 25, the fiber-receiving channel 34 is aligned with the optical axis 17. Therefore, the combination of the protrusion 36 and the flange 37 at the first end 31a of the platform 30 provides alignment of the fiber-receiving channel along the optical axis 17.

The flange 37 also prevents forward axial movement of the platform 30 into the passage 26 during the actuation process. Given the rather significant contact between the flange 37 and the back face 25b of the intermediate portion 25, the likelihood of having the platform 30 extrude into the passage 26 is very remote. Accordingly, by aligning and holding the front portion 31a of the platform and preventing its radial and axial movement, the protrusion 36 and flange 37 serve to reduce bending and distortion and even breakage of a fiber between the platform and the ferrule. This is an important advantage over the prior art in which the clamping members were relatively free to move allowing the portion of fiber between the clamping members and the ferrule to bend often to the point of breaking.

The back portion 31b of the platform 30 is supported by the sleeve 50a. Specifically, the top surface 32a and bottom surface 32b at the back portion 31b contact corresponding surfaces on the sleeve such that the back portion 31b cannot move vertically. Likewise, the sides 32c of the platform 30 contact the sides 52c of the sleeve 50a so that the back portion 31b cannot move horizontally. One skilled in the art will appreciate that the combination of the front portion 31a with its protrusion 36 and flange 37 and the back portion 31b with its top and bottom surfaces 32a and 32b provide stability for the platform 30 before, during and after actuation. By securing both ends of the platform from moving either axially or radially, the fiber-receiving channel 34 remains precisely positioned along the optical axis 17.

In a preferred embodiment, the platform 30 is a unitary structure, and, more preferably, it is integrally molded. By integrally molding the platform 30 all critical dimensions (e.g. the distance between the fiber-receiving channel and each of the protrusion 36, flange 37 and top and bottom planar surfaces 32a and 32b) may be established in a single, relatively-simple, molding step.

Referring to Figs. 4a and 4b, a perspective view and an axial cross-sectional view of the first cam member 40 of the attenuating connector 10 are shown, respectively. As with the other components of the attenuating connector 10, the first cam member as depicted in these drawings has a top/bottom and front/back orientation with the front being toward the right of the page and the top being toward the top as depicted in Fig. 4a, and with the front being toward the left of the page and the top being toward the top as depicted in Fig. 4b.

The first cam member 40 functions as the actuateable component which works in cooperation with the second cam member 50 to translate axial force into radial force and to transfer this radial force to the fiber held in the platform 30 to secure the fiber to the attenuating connector 10. To this end, the first cam member 40 comprises a first cam surface 41 and a contact surface 42. The contact surface 42 preferably is a substantially planar surface and moves in a generally parallel fashion with respect to the substrate surface 33a so as to clamp the fiber and hold it in the fiber-receiving channel 34. Again, as with the top and bottom the planar surfaces 32a and 32b of the platform 30, the planar contact surface 42 is readily machined and verified for accuracy. Additionally, since the clamping assembly involves two planar surfaces approaching one another in a parallel fashion, the reliability and precision of this clamping assembly is superior to that of tapered or otherwise non planar contacting surfaces.

In a preferred embodiment, the contact surface 42 defines front and back lead-in cavities 47a, 47b. Lead-in cavity 47a cooperates with lead-in cavity 38a of the platform 30 to guide the fiber into the back of the platform/first cam member assembly, while lead-in cavity 47a cooperates with lead-in cavity 38b to guide the fiber stub into the front of the platform/first cam member assembly.

The first cam surface 41 is inclined upward from the back to the front. In a preferred embodiment, the first cam surface 41 comprises one or more planar surfaces. Planar surfaces are preferred to radial surfaces for a number of reasons. First, as mentioned above, they are more readily manufactured and measured for accuracy. Second, unlike the prior art crimp-type attenuating connectors that use radial cam surfaces, planar surfaces use the entire cam surface in the camming action. That is, in the prior art, radial cam surfaces make only line contact. Applicants find that a planar contact is preferred to line contact from the standpoint of dissipating the cam forces and reliability in actuation.

In a preferred embodiment, the first cam surface 41 is stepped, meaning that the slope of the cam surface is not constant. As used herein, the term "slope" refers to the customary ratio of vertical change over horizontal change. In a stepped cam surface, the slope along the cam surface changes from low slope portions, or dwell portions, to relatively high slope portions, or rise portions. In a preferred embodiment, the dwell portions are essentially parallel to the optical axis and, thus, are parallel to the contact surface 42. Having the dwell portion parallel with the contact surface simplifies manufacturing and provides benefits during actuation as described below.

In a preferred embodiment there is a sequence of dwell and rise portions. For example, in a particularly preferred embodiment as shown in Fig. 4b, the cam surface comprises alternating dwell and rise portions 42, 43. Specifically, from back to front, the first cam surface 41 comprises a back dwell portion 42a and a back rise portion 43a, a first intermediate dwell portion 42b and a first intermediate rise portion 43b, a second intermediate dwell portion 42c and a second intermediate rise portion 43c, and finally a front dwell portion 42d. Although two intermediate dwell and rise sequences are shown in Fig. 4b, it should be understood that any number of dwell and rise sequences can be used within the scope of the present invention. The function of these rise and dwell portions and their benefits will be explained in detail below with respect to the sleeve 50a and the operation of the attenuating connector 10.

In a preferred embodiment, the first cam member is upwardly biased from the platform 30. Such a configuration provides access for introducing a fiber into the fiber-receiving channel either from the front end in the case of the fiber stub or from the back end in the case of the terminating fiber. The first cam member is elevated above the substrate surface 33a so that access along the fiber-receiving channel 34 is not encumbered. In a preferred embodiment, the first cam member is urged upward but not so far that excessive space is left between the substrate surface 33a and the contact surface 42 to allow the fiber to escape from the fiber-receiving channel 34 and move unconstrained on the substrate surface. To this end, the first cam surface 41 of the first cam member and the second cam surface 51 of the sleeve 50a are configured to contact and limit the upward travel of the first cam member 40 relative to the platform 30.

The means 46 for urging the first cam member upward relative to the platform 30 can vary. Fig. 4a depicts a preferred embodiment of the means 46 for urging the first cam member upward in which resilient members 46a extend down from the first cam member slightly below the contact surface 42. These resilient members 46a contact the substrate surface 33a and lift the first cam member such that the contact surface 42 is held away from the substrate surface 33a thereby creating space above the fiber-receiving channel. Being resilient, these members are readily deformed as the first cam member 40 is pushed down through the camming action of the first and second cam surfaces.

Referring to Figs. 5a through 5c, the second cam member 50 is shown in its preferred embodiment as a sleeve 50a in a perspective view, an axial vertical cross-sectional view, and an axial horizontal cross-sectional view, respectively. As with the other components, the sleeve has a top/bottom and front/back orientation. As shown in Figs. 5(a)-5(c) the front is toward the left of the page and the top is toward the bottom of the page.

The sleeve 50a has two primary functions. First, it acts as a complementary camming component to the first cam member 40 to translate axial force into radial force and thereby crimp the fiber to the platform. Second, in a preferred embodiment, the sleeve acts as a back stop to prevent the platform 30 from moving radially as a result of the first cam member applying radial force to the fiber contained in the fiber-receiving channel 34 of the platform 30.

The sleeve has an outer surface 56 which is designed to fit snugly within the second cavity. Preferably, the outer surface 56 has a planar portion 56a. The planar portion 56a serves to provide tolerance both between the sleeve and the second cavity and thereby allow the sleeve to slide within the cavity. Additionally, the planar portion 56a provides a register surface upon which the other planar surfaces (e.g., the second cam surface 51 and the bottom surface back rise) can be based. The outer surface 56 also comprises a back face 56b. The back face 56b provides a surface upon which the actuator 60 contacts to apply axial force to the sleeve to move it forward.

The interior of the sleeve 50a comprises a second cam surface 51 and a bottom surface 52. The second cam surface 51 is configured to complement the first cam surface 41, and, thus, is inclined from the back to the front like the first cam surface. As used herein, the terms "compliment" or "complimentary" in the context of cam surfaces refers to a substantial matching of inclines between cam surfaces so that the axial motion of one cam surface relative to the other results in radial force between the surfaces. Accordingly, the second cam surface 51 preferably comprises one or more planar surfaces, and even more preferably, comprises a stepped inclined surface similar to that described with respect to the first cam surface 41. Specifically, the stepped inclined surface comprises a number of alternating dwell and rise portions. Referring to Figs. 5b and 5c, from back to front, the second cam surface 51 comprises a back dwell portion 54a and a back rise portion 55a, a first intermediate dwell portion 54b and a first intermediate rise portion 55b, a second intermediate dwell portion 54c and a second intermediate rise portion 55c, and finally a front dwell portion 54d. Preferably, dwell surfaces 54a, 54b, 54c and 54d are essentially parallel to the optical axis 17.

The first and second cam surfaces 41, 51 cooperate such that there is only a camming action in which axial motion of the sleeve is translated into radial motion of the first cam member when a rise portion meets a corresponding rise portion. Conversely, when a rise portion is not sliding against a rise portion and only dwell portions are in contact, there is no camming action since the dwell portions are parallel to the optical axis in the preferred embodiment. Rather, the dwell portions simply slide over one another so there is little if any force transferred from the sleeve to the first cam member, and, in turn, to the platform. This is a significant feature of the preferred embodiment since it limits the amount of axial force that can be applied to the platform 30 and, thereby, avoids the problems of over actuating the attenuating connector and bending or breaking the fiber contained in the attenuating connector.

The bottom surface 51b is profiled to receive the bottom portion of the holder during actuation and thereby act as a back stop against the radial force applied to the platform 30 as a result of the first and second cam surfaces sliding over one another. Alternatively, rather than acting as a backstop for the platform, the clamping assembly 11 could be configured to allow the housing 20 to act as the backstop. For example, the sleeve may have a U-shape cross section and may coordinate with the platform such that the bottom surface of the platform would be at the opening of the "U" and in contact with the inner surface of the housing. This way, the capillary base would act as the backstop to resist the radial force being imparted to the platform from the first cam member.

Preferably, bottom surface back rise is a planar surface. As mentioned above, planar surfaces are more readily manufactured and verified as being within tolerance. The bottom surface back rise preferably comprises a stop 57 to polarize the sleeve and prevent it from being inserted backwards in the capillary base 20a. Upon full actuation of the sleeve, at least a portion of the stop 57 is received in the corresponding stop-receiving cavity 35 of the platform 30.

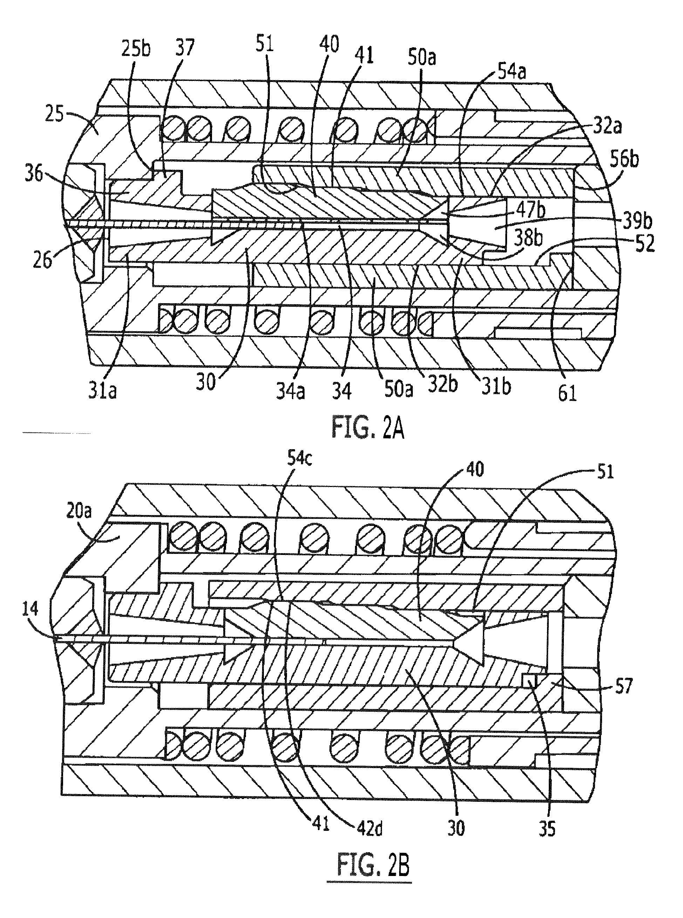

The operation of the attenuating connector 10 and the interplay of the various components will now be discussed with respect to the pre-actuated assembled attenuating connector 10 depicted in Fig. 2a, and the post-actuated assembled attenuating connector 10 depicted in Fig. 2b. Referring to Fig. 2a, the platform 30 is prevented from moving forward by virtue of the flange 37 against the back face 25b of the intermediate portion 25. The front portion 31a of the platform 30 is prevented from moving radially by virtue of the protrusion 36 being fitted snugly into the passageway 26 in the front end. Likewise, the back end 31b is disposed snugly within the sleeve 50a. The top surface 32a of the platform contacts the back dwell portion 54a of second cam surface 51 the sleeve 50a, while the bottom surface 32b of the platform contacts the bottom surface 52 of the sleeve. Hence, the platform cannot move vertically. Along the interface of the sleeve 50a and the platform 30, the curved sides 32c of the platform (see Fig. 3) contact the corresponding curved side walls 52c of the sleeve 50a (see Fig. 5) to prevent the platform from moving in horizontally.

The plunger or actuator 60 is behind the sleeve such that its forward face 61 is in contact with the back face 56b of the sleeve. The actuator 60 extends out behind the back of the attenuating connector 10 and provides a tubular section that is crimped onto the buffer (coating) of the optical fiber. In the preferred embodiment, the crimped section is hexagonal in cross section. Other cross sectional shapes could be used, for example, circular or octagonal.

To facilitate insertion of the terminating fiber (not shown) into the fiber-receiving channel 34 of the platform, the first cam member 40 is urged upward from the platform 30 such that the first cam surface 41 of the first cam member 40 contacts the second cam surface 51 of the sleeve 50a. By urging the first cam member upwardly from the platform, access is provided to fiber-receiving channel 34. The sleeve 50a is axially disposed with respect to the first cam member 40 such that, when the first cam member 40 is urged upwardly, the first and second cam surfaces 41, 51 meet so that the back dwell portions, first intermediate dwell portions, second intermediate dwell portions, and end dwell portions of the first and second cam surfaces 41, 51 contact, respectively. This particular contact between the first and second cam surfaces allows the first cam member to be urged upward but to a limited extent. That is, the first cam member is not raised relative to the substrate surface such that an excess amount of space is created above the fiber-receiving channel such that the fiber is free to escape from the fiber-receiving channel. Rather, the first cam member is raised so that the space between the contact surface and the substrate surface is high enough to provide access through the fiber-receiving channel but small enough to contain the fiber in the fiber-receiving channel. In a preferred embodiment, the space between the contact surface and the substrate surface in the pre-actuated position is less than the diameter of the bare fiber.

Further facilitating insertion of the terminating fiber in the fiber-receiving channel 34 are the back channel lead-in cavities, formed by the combination of the platform back lead-in cavity 32a and the first cam member back channel lead-in cavity 47b, and the initial back lead-in cavity 32b formed by the back portion 31b of the platform. In the pre-actuation state, the combination of the upwardly urging first cam member, the particular contact between the first and second cam surfaces, and the initial and channel lead-ins, facilitates the simple insertion of the terminating fiber into the attenuating connector 10.

The terminating fiber (not shown) is prepared by removing the buffer from the bare fiber and cleaving the end to produce a smooth low loss facet to optically couple with another fiber. This is a well known process. Where the optical fiber cable is of a reinforced jacketed type, the buffer stripping and cleaving is preceded by stripping the cable jacket and cutting the strength members contained within the jacket to length. Next, the terminating fiber, with bare fiber exposed at the end, is inserted into the back of the attenuating connector 10. The fiber passes initially though the passage 63 of the plunger 60 before the fiber end is introduced into the initial back lead-in cavity 32b of the back portion of the platform. The initial back lead-in cavity 32b funnels the fiber into the channel lead-in cavity (defined by cavities 32a, 47b) which, in turn, funnels the fiber into the fiber-receiving channel 34.

In a preferred embodiment, the bare fiber is pushed along the fiber-receiving channel until it contacts the back end face of the fiber stub at a median point 34a between the front and back ends of the fiber-receiving channel 34. Alternatively, in embodiments in which the optical coupling with the fiber stub occurs in the ferrule, the fiber is pushed through the entire length of the fiber-receiving channel and into the ferrule. In embodiments in which there is no fiber stub used at all, the fiber is pushed through the ferrule to the ferrule end face wherein the end of the fiber is positioned to be parallel to the end face of the ferrule.

Once the fiber is correctly situated in the attenuating connector 10, the clamping assembly is actuated to hold the fiber in that position. To that end, attenuating connector 10 is placed in a clamping tool (not shown) such that a first portion of the clamping tool contacts a front face 29 on the capillary base 20a, and a second portion of the clamping tool contacts the back face 16a of the rear housing 16. Actuation of the tool results in first and second portions moving towards each other, which thereby causes the forward movement of the rear housing 16 relative to the capillary base 20a. This relative motion causes the forward motion of the plunger and thus the sleeve 50a relative to the first cam member 40, thereby causing a camming action between the first and second cam surfaces 41, 51 so that the first cam member 40 is urged downward into the stationary platform 30 to thereby effect the clamping of the terminating fiber to the platform.

After actuation (see Fig. 2b), the terminating fiber is held securely in place by the clamping force between the platform 30 and the first cam member 40. This force is sufficient to prevent the terminating fiber from being extracted from the terminator 10 under normal forces. Additionally, if a fiber stub 14 is used, this clamping force will also serve to hold the fiber stub secure in the platform abutting the terminating fiber so as to achieve an efficient optical coupling between the two.

Thus, the clamping assembly of the present invention provides for a relatively simple-to-manufacture attenuating connector system that is robust and tolerant of variations in terminating styles and techniques in the field that have previously led to fiber bending and/or breakage in prior art attenuating connector systems.

## Claims

1. An optical attenuating connector (10) **characterized by**:
a housing (12) having a front orientation and a rear orientation, a ferrule (13) disposed in the housing (12), a fiber-receiving channel (34) disposed in the housing (12) rearward of the ferrule (13) and adapted to receive and retain a terminating fiber, and a stub (14) of attenuating fiber disposed in the ferrule (13).

2. The optical attenuating connector of claim 1, further comprising a latch (27) and a latch actuator (18) on the housing (12) for securing the attenuating connector (10) to an adapter.

3. The optical attenuating connector of claim 1 or 2, further comprising a spring member (15) rearward of the ferrule (13) for biasing the ferrule (13) forward in the housing (12).

4. The optical attenuating connector of claim 1,2 or 3 further comprising a clamping assembly (11) containing the fiber-receiving channel (34).

5. The optical attenuating connector of claim 4, wherein the fiber stub (14) extends rearwardly from the ferrule (13) into the clamping assembly (11).

6. The optical attenuating connector of claim 4 or 5, wherein the clamping assembly (11) comprises a first cam member (40) adjacent to the fiber-receiving channel (34) and having a first cam surface (41), and a second cam member (50) having a second cam surface (51), the first and second cam surfaces (41, 51) cooperating such that relative movement of the first and second cam members (40, 50) causes the first cam member (40) to move toward the fiber-receiving channel (34), and an actuator (60) to cause relative movement of the first and second cam members (40, 50).
